# EUROPEAN PATENT SPECIFICATION

(11) **EP 1 733 859 B1**
(45) Date of publication and mention of the grant of the patent: **18.07.2012**
(21) Application number: 05380127.0
(22) Date of filing: 14.06.2005
(51) Int. Cl.: B29C 45/14

(54) **Process and apparatus for manufacturing a connection and stress transmission element by overinjection, and connection and stress transmission element**
Verfahren und Vorrichtung zur Herstellung eines lastübertragenden Verbindungselements durch Umspritzen, und lastübertragendes Verbindungselement
Procédé et dispositif pour la fabrication d'un élément de connexion et de transmission d'efforts par surmoulage, et élément de connexion et de transmission d'efforts

(43) Date of publication of application: 20.12.2006
(73) Proprietor: Industria Auxiliar Alavesa, S.A. (Inauxa), 01470 Amurrio (Alava) (ES)
(72) Inventor: Morales Arnaez, Agustín, 48990 - Getxo (ES)
(74) Representative: Carvajal y Urquijo, Isabel

(56) References cited:
- EP-A- 0 690 242
- EP-A- 1 217 233
- WO-A-98/41772
- FR-A- 2 862 559
- GB-A- 997 836
- US-A1- 2003 019 323
- "THERMOPLASTICS IN SUSPENSIONS" AUTOMOTIVE ENGINEERING, SOCIETY OF AUTOMOTIVE ENGINEERS. WARRENDALE, US, vol. 104, no. 7, 1 July 1996 (1996-07-01), pages 68-69, XP000599076 ISSN: 0098-2571

## Description

### Field of the Invention

The invention falls within the field of automotive vehicle part manufacturing processes, particularly a process for manufacturing the parts related to connection and stress transmission elements, especially for suspension and steering mechanisms and the like In automotive vehicles, by overinjection. The invention also refers to an apparatus for manufacturing said parts and to the parts manufactured by said process.

### Background of the Invention

Traditional processes use rigid equipment in which injection in the cavities is performed at variable pressures and temperatures, having a subsequent cooling or crystallising time with part ejecting devices in the mould opening. This rigid equipment does not prevent the parts from being generated with shape defects due to shrinkage occurring after injection, while inside the mould. For example, in the case that the part is ring-shaped, the shrinkage causes an out-of-roundness.

Several rigid axle suspension systems for vehicles are known in the art such as those disclosed in documents EP0776275, EP0783415, EP1077819, and EP1147023, and steering systems such as that disclosed in EP1329642.

FR2862559 discloses a process for manufacturing a suspension arm for a vehicle constituted by a rigid bar extended on two opposed heads, each head having a transversal opening, perpendicular to the bar for receiving a joint. It is placed on a mould a profile forming the bar and on one end said joint. The head is over molded on said end with the aid of a polymer material so as to join the head to the end.

US2003/0019323 discloses a mechanical linkage assembly including one or more mechanical devices, over molded around one or both opposing ends of a connecting rod. The connecting rod is formed with a reduced diameter portion to enable the mechanical device to rotate relative thereto, while limiting axial movement therebetween.

### Description of the Invention

As well as avoiding the defects present in the state of the art mentioned above, the present invention describes a process and a manufacturing apparatus greatly reducing costs since the moulding is performed by a single injection whereas with traditional processes injection is performed on several occasions. This reduction in manufacturing costs also logically affects the cost of the final manufactured product, that is, the joining element.

Another differentiating feature of the present invention regarding the state of the art occurs with the part or mould holding carriages, which in the present invention are mobile; in contrast, the holding carriages in known apparatuses are fixed. Mobility of the part holding carriage allows compensating for plastic compressions.

The process of the invention also allows the element manufactured by means of said process to contain an overinjection product having a series of advantages over those known in the state of the art. Among these, the overinjection product is a material having a semi-crystalline structure with a low coefficient of friction on metals and plastics, about 10 times less than those known, and a low abrasion level.

Structural plastics have reinforcing fillers which abrade the material providing mechanical resistance to the joining element, which may be of steel. The invention allows using plastics without reinforcing fillers and which therefore do not wear the steel, making the useful life of a part of the invention 100 times that of a conventional part.

After stating some of the advantages provided by the present invention, the same is now described.

A first aspect of the invention refers to a process for manufacturing by overinjection:
a connection and stress transmission element for automotive vehicle suspension and steering mechanisms comprising:
   a bar-shaped central portion:
      having a first end and a second end;
      of a material providing mechanical resistance;
   a first end portion of plastic material overinjected on the first end so that the central portion and the first end portion form a single-piece joining element;
   by means of an apparatus for overinjecting an overinjection product on a central portion of a joining element having a surface to be overinjected in order to obtain a joining element, said apparatus comprising:
   containing means configured to define a cavity between the surface to be overinjected and said containing means;
   inlet means located in the containing means so as to allow the overinjection product to be introduced in the cavity.
characterised in that said process comprises the steps of:
i) placing the central portion in a central mould having an upper and a lower mould plate;
ii) placing a first side mould having an upper and a lower mould plate opposite to the first end;
iii) shifting the central mould and the first side mould to an overinjection position in which the moulds make up the containing means and define a cavity in which an overinjection product is injected to make up the first end portion of plastic material on the central portion;
iv) shifting the central mould and the first side mould up to a mould release position in which the single-piece joining element is extracted.

A second aspect of the invention refers to a process further comprising:
2.1) placing before step iii) an auxiliary mould opposite to the second end;
2.2) shifting before step iv) the auxiliary mould to an overinjection position in which the central mould and the first side mould make up the containing means and define a cavity in which an overinjection product is overinjected in order to make up the first end portion of plastic material on the central portion;
2.3) shifting after step iii) the auxiliary mould to a mould release position in which the single-piece joining element is extracted.

A third aspect of the invention refers to a process further comprising:
a second end portion of plastic material overinjected on the second end so that the central portion, the first end portion and the second end portion form a single-piece joining element;

3.1) placing before step iii) a second side mould having an upper and a lower mould plate opposite to the second end;
3.2) shifting before step iv) the second side mould to an overinjection position in which the the central mould, the first side mould and the second side mould make up the containing means and define a cavity in which an overinjection product is overinjected in order to make up the first end portion of plastic material and the second end portion of plastic material on the central portion;
3.3) shifting after step iii) the second side mould to a mould release position in which the single-piece joining element is extracted.

The process according to the first aspect of the invention contemplates that the geometry of the central mould prevents the use of an auxiliary mould from being necessary; this alternative of using an auxiliary mould is considered in the second aspect of the invention; similarly, the possibility of using a second side mould is contemplated according to the third aspect of the invention.

On the other hand, according to any of the first, second and third aspects of the invention, the possibility that any of the inlet means, connecting means, pressure measuring means, and temperature measuring means may be located in any of the central mould, the first side mould, the auxiliary mould and the second side mould, is also contemplated.

Another approach for the first, second and third aspects of the invention, which will be called first', second' and third' aspects, would be that Included below.

The first' aspect of the invention refers to a process for manufacturing a joining element by overinjection by means of the apparatus described above comprising the steps of:
i') placing the central portion in a central mould;
ii) placing a first side mould opposite to the first end;
iii') shifting said moulds to an injection moulding position in which the moulds make up the containing means and define a cavity in which an overinjection product is overinjected to make up the first end portion of plastic material on the central portion;
iv') shifting the moulds to a mould release position in which the single-piece joining element is extracted.

According to the second' or third 'aspects of the invention, the process may also comprise, respectively, one of the following steps:
ii'a)placing an auxiliary mould opposite to the second end;
ii'b)placing a second side mould opposite to the second end.

The processes of the invention may further comprise the following supplementary steps:
a) generating a vacuum In the cavity through connecting means by means of vacuum generating means;
b) introducing the overinjection product in the cavity through inlet means by means of introduction means;
c) generating overpressure in the cavity through connecting means by means of overpressure generating means in order to obtain a single-piece joining element comprising at least a first end portion.

The vacuum generating step a) may comprise:
a1)reaching a first pressure P1 comprised between 2500 Pa and 25 kPa in the cavity during a first time t1 comprised between 1 s and 120s;
a2) ending step a) with a second pressure P2 comprised between 2500 Pa and 25 kPa in the cavity during a second time t2 comprised between 1s and 120s.

The processes of the invention may further comprise a prior substep a0) in order to reach a prior temperature T0 comprised between 20°C and 120°C in the central portion to be overinjected.

The overinjection material input step b) may comprise:
b1) introducing said material in the cavity which is at a first temperature T1 comprised between 100°C and 400°C during a third time t3 comprised between 1s and 120s;
b2) ending step b) with a third pressure P3 comprised between 2 MPa and 100 MPa in the cavity during a fourth time t4 comprised between 1s and 120s.

The overpressure generation step c) may comprise:
c1) starting with a fourth pressure P4 comprised between 2 MPa and 100 MPa in the cavity during a fifth time t5 comprised between 1s and 120s;
c2) ending step c) with a fifth pressure P5 comprised between 2 MPa and 100 MPa in the cavity.

The processes of the invention may further comprise a prior drying step for drying the surface to be overinjected. The prior drying step may comprise reaching a drying temperature T'0 comprised between 20°C and 150°C on the surface to be overinjected upon for a drying time t'0 comprised between 1s and 120s.

The process of the invention also contemplates subsequently curing the overinjected surface. The curing step may comprise reaching a subsequent temperature Tn comprised between 20°C and 150°C in the overinjected surface during a subsequent time comprised between 1s and 120s.

A fourth aspect of the invention refers to a connection and stress transmission element for automotive vehicle suspension and steering mechanisms manufactured by means of the aforementioned process in which the overinjected product is a material having:
a semi-crystalline structure;
a low coefficient of friction on metals and plastics; the coefficient of friction on structural plastics is 10, whereas the invention allows using plastics with a coefficient of friction of 1;
a low abrasion level; structural plastics have reinforcing fillers which abrade steel, whereas the invention allows using plastics without reinforcing fillers and therefore they do not wear the steel, which makes the useful life of a part of the invention 100 times that of a conventional part.

The overinjection product in the joining element may be a material selected from: polyamides, polyesters, monoacetals, polyacetals and mixtures thereof.

At least one end portion in the joining element may comprise a device selected from a ball socket and a ring configured to house fixing means. Said fixing means may comprise a device selected from a bushing, a silent-block and combinations thereof.

The central portion of the joining element of the invention may have a shape selected from a notably straight shape, an angled shape, a U shape and a C shape.

A fifth aspect of the invention refers to an apparatus for manufacturing the joining element by overinjection by means of the process described above, in which the apparatus may further comprise coupling means for:
coupling the containing means to the surface to be overinjected;
assuring leak-tightness between the containing means and the surface to be overinjected, adapting the shape of the containing means to the surface to be overinjected.

The apparatus of the invention may also comprise connecting means located in the containing means so as to allow a pressure selected from vacuum pressure, ambient pressure and overpressure to be generated in the cavity.

The apparatus may additionally incorporate:
pressure measuring means located in the containing means to measure pressure in the cavity;
temperature measuring means located in the containing means to measure temperature in the cavity.

The apparatus may further comprise:
introduction means to introduce the overinjection product in the cavity through the inlet means.

The apparatus of the invention may further comprise:
vacuum generating means to generate a vacuum pressure in the cavity through the connecting means;
overpressure generating means to generate an overpressure in the cavity through the connecting means.

### Brief Description of the Drawings

A set of drawings is briefly described below aiding to better understand the invention and specifically related to an embodiment of said invention, presented as a non-limiting example thereof.

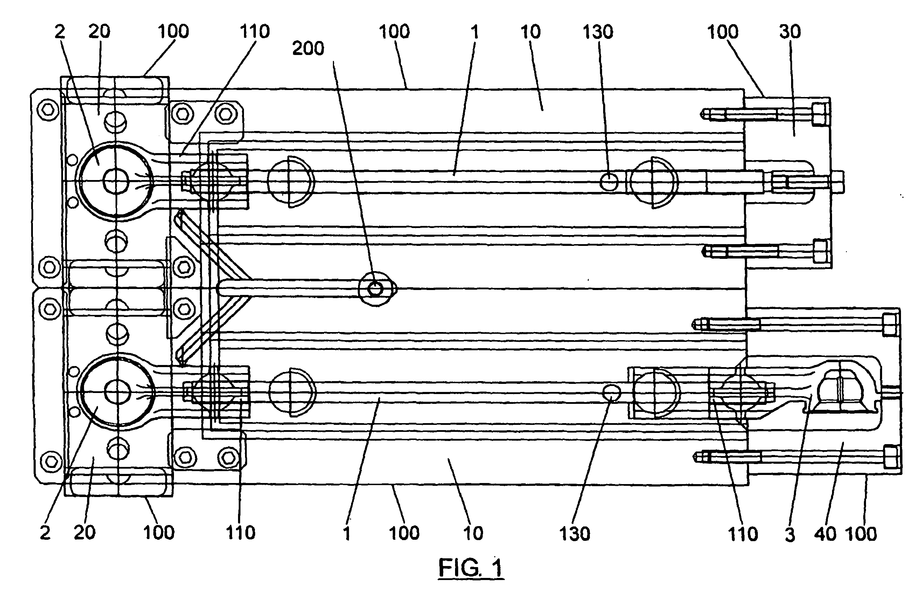

Figure 1 shows a sectional plan view of the apparatus of the invention showing a single-piece joining element of the invention.

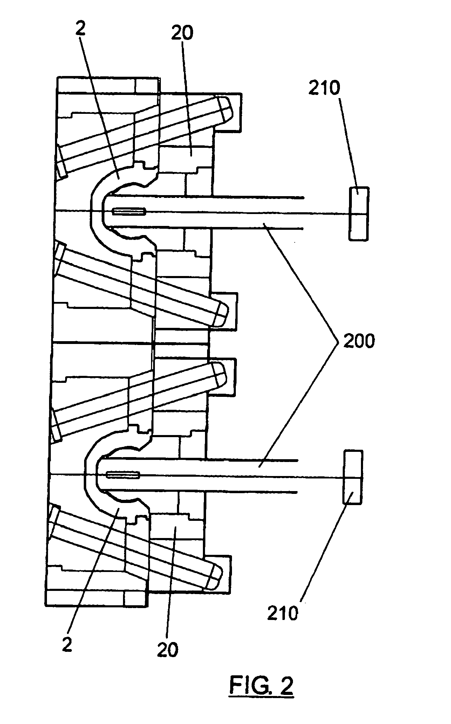

Figure 2 shows a sectional side view of the apparatus of the invention. Figures 1 and 2 show an embodiment in which the apparatus of the invention is made up of a multiple mould.

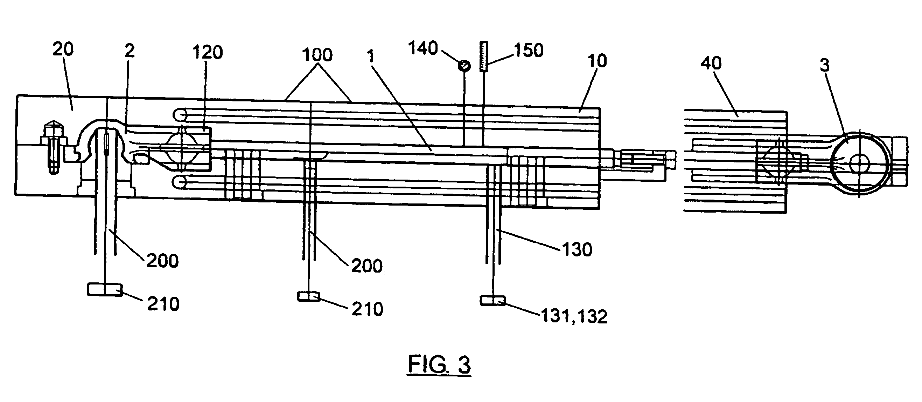

Figure 3 shows a sectional elevational view of the apparatus of the invention showing an single-piece joining element of the invention.

### Detailed Description of an Embodiment of the Invention

A first embodiment of the invention refers to a process for manufacturing a connection and stress transmission element for automotive vehicle suspension and steering mechanisms by overinjection comprising:
a central portion 1:
   in the form of a bar having a first end and a second end;
   of a material providing mechanical resistance;
a first end portion 2 of plastic material overinjected on the first end so that the central portion 1 and the first end portion 2 form a single-piece joining element.

The process is carried out by means of an apparatus for overinjecting an overinjection product on a central portion 1 of a joining element having a surface to be overinjected in order to obtain a joining element, said apparatus comprising:
containing means 100 configured to define a cavity 110 between the surface to be overinjected and said containing means 100;
inlet means 200 located in the containing means 100 so as to allow the overinjection product to be introduced in the cavity 110.

The process carried out comprises the steps of:
i) placing the central portion 1 in a central mould 10 having an upper and a lower mould plate; at least one area of the central portion 1 will not be overinjected, said area therefore being exposed; the central portion 1 is held by the central mould 10 in this non-overinjected area;
ii) placing a first side mould 20 having an upper and a lower mould plate opposite to the first end;
iii) shifting the central mould 10 and the first side mould 20 to an overinjection position in which the moulds make up the containing means 100 and define a cavity 110 in which an overinjection product, such as a plastic material, is overinjected to make up the first end portion 2 on the central portion 1; the overinjection product is assured to reach all the areas to be overinjected in this overinjection position:
iv) shifting the central mould 10 and the first side mould 20 to a mould release position in which the single-piece joining element is extracted.

A second embodiment of the invention refers to a connection and stress transmission element for automotive vehicle suspension and steering mechanisms manufactured by means of the process described above. In said joining element the overinjection product is a material having:
a semi-crystalline structure;
a low abrasion level to avoid wearing the material having mechanical resistance by an absence of reinforcing fillers.

A third embodiment of the invention refers to an apparatus for manufacturing the joining element by means of the process described above, in which said apparatus further comprises coupling means 120 for:
coupling the containing means 100 to the surface to be overinjected;
assuring leak-tightness between the containing means 100 and the surface to be overinjected, adapting the shape of the containing means 100 to the surface to be overinjected.

## Claims

1. A process for manufacturing a connection and stress transmission element for automotive vehicle suspension and steering mechanisms by overinjection, comprising:
a bar-shaped central portion (1):
having a first end and a second end;
of a material providing mechanical resistance;
a first end portion (2) of plastic material which is overinjected on the first end so that the central portion (1) and the first end portion (2) form a single-piece joining element;
by means of an apparatus for overinjecting an overinjection product on a central portion (1) of a joining element having a surface to be overinjected so as to obtain a joining element, said apparatus comprising:
containing means (100) configured to define a cavity (110) between the surface to be overinjected and said containing means (100);
inlet means (200) located in the containing means (100) so as to allow the overinjection product to be introduced in the cavity (110).
**characterised in that** said process comprises the steps of:
i) placing the central portion (1) in a central mould (10) having an upper and a lower mould plate;
ii) placing a first side mould (20) having an upper and a lower mould plate opposite to the first end;
iii) shifting the central mould (10) and the first side mould (20) to an overinjection position In which the moulds make up the containing means (100) and define a cavity (110) in which an overinjection product is overinjected to make up the first end portion (2) of plastic material on the central portion (1);
iv) shifting the central mould (10) and the first side mould (20) to a mould release position in which the single-piece joining element is extracted.

2. The process of claim 1, further comprising:
2.1) placing before step iii) an auxiliary mould (30) opposite to the second end;
2.2) shifting before step iv) the auxiliary mould (30) to an overinjection, position in which the central mould (10) and the first side mould (20) make up the containing means (100) and define a cavity (110) in which an overinjection product is overinjected in order to make up the first end portion (2) of plastic material on the central portion (1);
2.3) shifting after step iii) the auxiliary mould (30) to a mould release position in which the single-piece joining element is extracted.

3. The process of claim 1, further comprising:
a second end portion (3) of plastic material which is overinjected on the second end so that the central portion (1), the first end portion (2) and the second end portion (3) form a single-piece joining element;
3.1) placing before step iii) a second side mould (40) having an upper and a lower mould plate opposite to the second end;
3.2) shifting before step iv) the second side mould (40) to an overinjection position in which the the central mould (10), the first side mould (20) and the second side mould (40) make up the containing means (100) and define a cavity (110) in which an overinjection product is overinjected in order to make up the first end portion (2) of plastic material and the second end portion (3) of plastic material on the central portion (1);
3.3) shifting after step iii) the second side mould (40) to a mould release position in which the single-piece joining element is extracted.

4. The process of any of claims 1-3 **characterised in that** while in the overinjection position the process further comprises the steps of:
a) generating a vacuum in the cavity (110) through connecting means (130) by means of vacuum generating means (131);
b) introducing the overinjection product in the cavity (110) through inlet means (200) by means of introducing means (210);
c) generating overpressure in the cavity (110) through connecting means (130) by means of overpressure generating means (132) so as to obtain a single-piece joining element comprising at least a first end portion (2).

5. The process of claim 4 **characterised in that** the vacuum generating step a) comprises:
a1) reaching a first pressure P1 comprised between 2500 Pa and 25 kPa in the cavity (110) during a first time t1 comprised between 1s and 120s;
a2) ending step a) with a second pressure P2 comprised between 2500 Pa and 25 kPa in the cavity (110) during a second time t2 comprised between 1s and 120s.

6. The process of any of claims 4-5 **characterised in that** it further comprises a prior substep a0) so as to reach a prior temperature T0 comprised between 20°C and 120°C in the central portion to be overinjected.

7. The process of any of claims 4-6 **characterised in that** the overinjection material introduction step b) comprises:
b1)introducing said material in the cavity, which is at a first temperature T1 comprised between 100°C and 400°C during a third time t3 comprised between 1s and 120s;
b2) ending step b) at a third pressure P3 comprised between 2 MPa and 100 MPa in the cavity (110) during a fourth time t4 comprised between 1s and 120s.

8. The process of any of claims 4-7 **characterised in that** the overpressure generation step c) comprises:
c1) starting at a fourth pressure P4 comprised between 2 MPa and 100 MPa in the cavity (110) during a fifth time t5 comprised between 1s and 120s;
c2) ending step c) at a fifth pressure P5 comprised between 2 MPa and 100 MPa in the cavity (110).

9. The process of any of claims 4-8 **characterised in that** it further comprises previously drying the surface to be overinjected.

10. The process of claim 9 **characterised in that** the preceding drying step comprises reaching a drying temperature T'0 comprised between 20°C and 150°C in the surface to be overinjected during a drying time t'0 comprised between 1 s and 120s.

11. The process of any of claims 4-10 **characterised in that** it further comprises subsequently curing the overinjected surface.

12. The process of claim 11 **characterised in that** the curing step comprises reaching a subsequent temperature Tn comprised between 20°C and 150°C in the overinjected surface during a subsequent time comprised between 1 sand 120s.

13. A connection and stress transmission element for automotive vehicle suspension and steering mechanisms comprising:
a bar-shaped central portion (1):
having a first end and a second end;
of a material providing mechanical resistance;
a first end portion (2) of plastic material which is overinjected on the first end so that the central portion (1) and the first end portion (2) form a single-piece joining element;
manufactured by means of the process of any of claims 1-12, wherein
the overinjection product is a material having:
13a) a semi-crystalline structure;
13b) a low abrasion level to avoid wearing the material having mechanical resistance by an absence of reinforcing fillers;
13c) wherein at least one end portion (2, 3) comprises a ball socket.

14. The connection and stress transmission element of claim 13, wherein the overinjection product is a material, having a low friction coefficient on metals and plastics wherein the coefficient of friction is 1.

15. The connection and stress transmission element of any of claims 13-14, wherein the overinjection product is a material selected from: polyamides, polyesters, monoacetals, polyacetals and mixtures thereof.

16. The connection and stress transmission element of any of claims 13-15, wherein one end portion (2, 3) comprises a ring configured to house fixing means.

17. The connection and stress transmission element of claim 16, wherein the fixing means comprise a device selected from a bushing, a silent-block and combinations thereof.

18. The connection and stress transmission element of any of claims 13-17, wherein the central portion (1) has a shape selected from a substantially straight-shaped, angled-shaped, U-shaped and C-shaped.

19. An apparatus for manufacturing the connection and stress transmission element of any of claims 13-18 by means of the process of any of claims 1-12, wherein that said apparatus further comprises coupling means (120) for:
coupling the containing means (100) to the surface to be overinjected;
assuring leak-tightness between the containing means (100) and the surface to be overinjected, adapting the shape of the containing means (100) to the surface to be overinjected.

20. The apparatus of claim 19, further comprising connecting means (130) located in the containing means (100) to allow a pressure selected from a vacuum pressure and an overpressure to be generated in the cavity (110).

21. The apparatus of any of claims 19-20, further comprising:
pressure measuring means (140) located in the containing means (100) to measure pressure in the cavity (110);
temperature measuring means (150) located in the containing means (100) to measure temperature in the cavity (110)

22. The apparatus of any of claims 19-21, further comprising:
introducing means (210) to introduce the overinjection product in the cavity (110) through the inlet means (200).

23. The apparatus of any of claims 19-22, further comprising:
vacuum generating means (131) for generating a vacuum pressure in the cavity (110) through the connecting means (130);
overpressure generating means (132) for generating an overpressure in the cavity (110) through the connecting means (130).

## Patentansprüche

1. Verfahren für die Herstellung eines Anschluss- und Kraftübertragungselements für Aufhängungs- und Lenkmechanismen von Kraftfahrzeugen mittels Überspritzung, umfassend:
einen stabförmigen Mittelteil (1):
welcher ein erstes Ende und ein zweites Ende aufweist;
aus einem Material, welches eine mechanische Festigkeit bereitstellt;
einen ersten Endteil (2) aus Kunststoffmaterial, welcher auf dem ersten Ende überspritzt wird, so dass der Mittelteil (1) und der erste Endteil (2) ein einstückiges Verbindungselement bilden;
mittels einem Gerät für die Überspritzung eines Überspritzprodukts auf einen Mittelteil (1) eines Verbindungselements, welches eine zu überspritzende Oberfläche aufweist, um ein Verbindungselement zu erhalten, wobei das genannte Gerät Folgendes umfasst:
Aufnahmemittel (100), welche dazu ausgebildet sind, einen Hohlraum (110) zwischen der zu überspritzenden Oberfläche und den genannten Aufnahmemitteln (100) zu definieren;
Einlassmittel (200), welche sich in den Aufnahmemitteln (100) befinden, um die Einbringung des Überspritzprodukts in den Hohlraum (110) zu ermöglichen,
**dadurch gekennzeichnet, dass** das genannte Verfahren folgende Schritte umfasst:
i) Anbringen des Mittelteils (1) in einer Mittelform (10), welche eine obere und eine untere Formplatte aufweist,
ii) Anbringen einer erstseitigen Form (20), welche eine obere und eine untere Formplatte aufweist, entgegengesetzt zum ersten Ende;
iii) Versetzen der Mittelform (10) und der erstseitigen Form (20) zu einer Überspritzposition, in welcher die Formen die Aufnahmemittel (100) bilden und einen Hohlraum (110) definieren, in welchen ein Überspritzprodukt überspritzt wird, um den ersten Endteil (2) aus Kunststoffmaterial auf den Mittelteil (1) zu bilden;
iv) Versetzen der Mittelform (10) und der erstseitigen Form (20) zu einer Formentfernungsposition, in welcher das einstückige Verbindungselement herausgenommen wird.

2. Verfahren nach Anspruch 1, ferner umfassend:
2.1) Anbringen vor dem Schritt iii) einer Hilfsform (30) entgegengesetzt zum zweiten Ende;
2.2) Versetzen vor dem Schritt iv) der Hilfsform (30) zu einer Überspritzposition, in welcher die Mittelform (10) und die erstseitige Form (20) die Aufnahmemittel (100) bilden und einen Hohlraum (110) definieren, in welchen ein Überspritzprodukt überspritzt wird, um den ersten Endteil (2) aus Kunststoffmaterial auf den Mittelteil (1) zu bilden;
2.3) Versetzen nach dem Schritt iii) der Hilfsform (30) zu einer Formentfernungsposition, in welcher das einstückige Verbindungselement herausgenommen wird.

3. Verfahren nach Anspruch 1, ferner umfassend:
einen zweiten Endteil (3) aus Kunststoffmaterial, welcher auf dem zweiten Ende überspritzt wird, so dass der Mittelteil (1), der erste Endteil (2) und der zweite Endteil (3) ein einstückiges Verbindungselement bilden;
3.1) Anbringen vor dem Schritt iii) einer zweitseitigen Form (40), welche eine obere und eine untere Formplatte aufweist, entgegengesetzt zum zweiten Ende;
3.2) Versetzen vor dem Schritt iv) der zweitseitigen Form (40) zu einer Überspritzposition, in welcher die Mittelform (10), die erstseitige Form (20) und die zweitseitige Form (40) die Aufnahmemittel (100) bilden und einen Hohlraum (110) definieren, in welchen ein Überspritzprodukt überspritzt wird, um den ersten Endteil (2) aus Kunststoffmaterial und den zweiten Endteil (3) aus Kunststoffmaterial auf den Mittelteil (1) zu bilden;
3.3) Versetzen nach dem Schritt iii) der zweitseitigen Form (40) zu einer Formentfernungsposition, in welcher das einstückige Verbindungselement herausgenommen wird.

4. Verfahren nach einem der Ansprüche 1-3, **dadurch gekennzeichnet, dass** bei der Überspritzposition, das Verfahren ferner folgende Schritte umfasst:
a) Erzeugen eines Vakuums in dem Hohlraum (110) durch Anschlussmittel (130) mit Vakuumerzeugungsmitteln (131);
b) Einbringen des Überspritzprodukts in den Hohlraum (110) durch Einlassmittel (200) mit Einbringungsmitteln (210);
c) Erzeugen eines Überdrucks in dem Hohlraum (110) durch Anschlussmittel (130) mit Überdruckerzeugungsmitteln (132), um ein einstückiges Verbindungselement zu erhalten, das mindestens einen ersten Endteil (2) umfasst.

5. Verfahren nach Anspruch 4, **dadurch gekennzeichnet, dass** der Vakuumerzeugungsschritt a) Folgendes umfasst:
a1) Erreichen eines ersten Drucks P1 in dem Hohlraum (110), welcher zwischen 2500 Pa und 25 kPa liegt, während einer ersten Zeit t1, welche zwischen 1 Sek. und 120 Sek. liegt;
a2) Beenden des Schritts a) mit einem zweiten Druck P2 in dem Hohlraum (110), welcher zwischen 2500 Pa und 25 kPa liegt, während einer zweiten Zeit t2, welche zwischen 1 Sek. und 120 Sek. liegt.

6. Verfahren nach einem der Ansprüche 4-5, **dadurch gekennzeichnet, dass** es ferner einen vorherigen Teilschritt a0) umfasst, um eine vorherige Temperatur T0 in dem zu überspritzenden Mittelteil zu erreichen, welche zwischen 20 °C und 120 °C liegt.

7. Verfahren nach einem der Ansprüche 4-6, **dadurch gekennzeichnet, dass** der Überspritzmaterialeinbringungsschritt b) Folgendes umfasst:
b1) Einbringen des genannten Materials in den Hohlraum, welches eine erste Temperatur T1 aufweist, welche zwischen 100 °C und 400 °C liegt, während einer dritten Zeit t3, welche zwischen 1 Sek. und 120 Sek. liegt;
b2) Beenden des Schritts b) bei einem dritten Druck P3 in dem Hohlraum (110), welcher zwischen 2 MPa und 100 MPa liegt, während einer vierten Zeit t4, welche zwischen 1 Sek. und 120 Sek. liegt.

8. Verfahren nach einem der Ansprüche 4-7, **dadurch gekennzeichnet, dass** der Überdruckerzeugungsschritt c) Folgendes umfasst:
c1) Anfangen bei einem vierten Druck P4 in dem Hohlraum (110), welcher zwischen 2 MPa und 100 MPa liegt, während einer fünften Zeit t5, welche zwischen 1 Sek. und 120 Sek. liegt;
c2) Beenden des Schritts c) bei einem fünften Druck P5 in dem Hohlraum (110), welcher zwischen 2 MPa und 100 MPa liegt.

9. Verfahren nach einem der Ansprüche 4-8, **dadurch gekennzeichnet, dass** es ferner das vorherige Trocknen der zu überspritzenden Oberfläche umfasst.

10. Verfahren nach Anspruch 9, **dadurch gekennzeichnet, dass** der vorherige Trocknungsschritt das Erreichen einer Trocknungstemperatur T'0 in der zu überspritzenden Oberfläche umfasst, welche zwischen 20 °C und 150 °C liegt, während einer Trocknungszeit t'0, welche zwischen 1 Sek. und 120 Sek. liegt.

11. Verfahren nach einem der Ansprüche 4-10, **dadurch gekennzeichnet, dass** es ferner die nachfolgende Aushärtung der überspritzten Oberfläche umfasst.

12. Verfahren nach Anspruch 11, **dadurch gekennzeichnet, dass** der Aushärtungsschritt das Erreichen einer nachfolgenden Temperatur Tn in der überspritzten Oberfläche umfasst, welche zwischen 20 °C und 150 °C liegt, während einer nachfolgenden Zeit, welche zwischen 1 Sek. und 120 Sek. liegt.

13. Anschluss- und Kraftübertragungselement für Aufhängungs- und Lenkmechanismen von Kraftfahrzeugen, umfassend:
einen stabförmigen Mittelteil (1):
welcher ein erstes Ende und ein zweites Ende aufweist;
aus einem Material, welches eine mechanische Festigkeit bereitstellt;
einen ersten Endteil (2) aus Kunststoffmaterial, welcher auf dem ersten Ende überspritzt wird, so dass der Mittelteil (1) und der erste Endteil (2) ein einstückiges Verbindungselement bilden;
welches durch das Verfahren nach einem der Ansprüche 1-12 hergestellt wird, wobei das Überspritzprodukt ein Material ist, das Folgendes aufweist:
13a) eine teilkristalline Struktur;
13b) einen geringen Abrieb, um den Verschleiß des Materials zu verhindern, welches eine mechanische Festigkeit bei Abwesenheit von verstärkenden Füllstoffen aufweist;
13c) wobei mindestens ein Endteil (2, 3) ein Kugelgelenk umfasst.

14. Anschluss- und Kraftübertragungselement nach Anspruch 13, wobei das Überspritzprodukt ein Material ist, das einen niedrigen Reibungskoeffizient für Metalle und Kunststoffe aufweist, wobei der Reibungskoeffizient 1 ist.

15. Anschluss- und Kraftübertragungselement nach einem der Ansprüche 13-14, wobei das Überspritzprodukt ein Material ist, ausgewählt aus: Polyamiden, Polyestern, Monoacetalen, Polyacetalen und Mischungen derselben.

16. Anschluss- und Kraftübertragungselement nach einem der Ansprüche 13-15, wobei ein Endteil (2, 3) einen Ring umfasst, welcher zur Aufnahme von Befestigungsmitteln ausgebildet ist.

17. Anschluss- und Kraftübertragungselement nach Anspruch 16, wobei die Befestigungsmittel eine Vorrichtung umfassen, ausgewählt aus einer Buchse, einem Silentblock oder Kombinationen derselben.

18. Anschluss- und Kraftübertragungselement nach einem der Ansprüche 13-17, wobei der Mittelteil (1) eine Form aufweist, ausgewählt aus einer wesentlich geraden Form, einer winkeligen Form, einer U-Form und einer C-Form.

19. Gerät für die Herstellung des Anschluss- und Kraftübertragungselements nach einem der Ansprüche 13-18 mittels dem Verfahren nach einem der Ansprüche 1-12, wobei das genannte Gerät ferner Kopplungsmittel (120) umfasst zur:
Kopplung der Aufnahmemittel (100) mit der zu überspritzenden Oberfläche;
Gewährleistung einer Dichtigkeit zwischen den Aufnahmemitteln (100) und der zu überspritzenden Oberfläche, unter Anpassung der Form der Aufnahmemittel (100) an die zu überspritzenden Oberfläche.

20. Gerät nach Anspruch 19, ferner umfassend Anschlussmittel (130), welche sich in den Aufnahmemitteln (100) befinden, um in dem Hohlraum (110) die Erzeugung eines Drucks ausgewählt aus einem Vakuumdruck und einem Überdruck zu ermöglichen.

21. Gerät nach einem der Ansprüche 19-20, ferner umfassend:
Druckmessmittel (140), welche sich in den Aufnahmemitteln (100) befinden, um den Druck in dem Hohlraum (110) zu messen;
Temperaturmessmittel (150), welche sich in den Aufnahmemitteln (100) befinden, um die Temperatur in dem Hohlraum (110) zu messen.

22. Gerät nach einem der Ansprüche 19-21, ferner umfassend:
Einbringungsmittel (210) zum Einbringen des Überspritzprodukts in den Hohlraum (110) durch die Einlassmittel (200).

23. Gerät nach einem der Ansprüche 19-22, ferner umfassend:
Vakuumerzeugungsmittel (131) für die Erzeugung eines Vakuumdrucks in dem Hohlraum (110) durch die Anschlussmittel (130);
Überdruckerzeugungsmittel (132) für die Erzeugung eines Überdrucks in dem Hohlraum (110) durch die Anschlussmittel (130).

## Revendications

1. Procédé pour fabriquer un élément de connexion et transmission de contraintes pour des mécanismes de suspension et direction de véhicule automobile par surinjection, comprenant :
une portion centrale sous forme de barre (1) :
ayant une première extrémité et une deuxième extrémité ;
d'une matière fournissant de la résistance mécanique ;
une première portion d'extrême (2) en matière plastique qui est surinjectée sur la première extrémité de manière à ce que la portion centrale (1) et la première portion d'extrême (2) forment un élément d'union d'un seul tenant ;
au moyen d'un appareil pour surinjecter un produit de surinjection sur une portion centrale (1) d'un élément d'union ayant une surface à surinjecter pour obtenir un élément d'union, ledit appareil comprenant :
des moyens de confinement (100) configurés pour définir une cavité (110)
entre la surface à surinjecter et lesdits moyens de confinement (100) ;
des moyens d'entrée (200) situés dans les moyens de confinement (100)
pour permettre l'introduction du produit de surinjection dans la cavité (110),
**caractérisé en ce que** ledit procédé comprend les étapes de :
i) mise en place de la portion centrale (1) dans un moule central (10) ayant une plaque de moule supérieure et une plaque de moule inférieure ;
ii) mise en place d'un premier moule latéral (20) ayant une plaque de moule supérieure et une plaque de moule inférieure à l'opposé de la première extrémité ;
iii) déplacement du moule central (10) et du premier moule latéral (20) à une position de surinjection dans laquelle les moules constituent les moyens de confinement (100) et définissent une cavité (110) dans laquelle est surinjecté un produit de surinjection pour constituer la première portion d'extrême (2) en matière plastique sur la portion centrale (1) ;
iv) déplacement du moule central (10) et du premier moule latéral (20) à une position de libération de moule dans laquelle on extrait l'élément d'union d'un seul tenant ;

2. Procédé selon la revendication 1, comprenant, en outre :
2.1) la mise en place avant l'étape iii) d'un moule auxiliaire (30) à l'opposé de la deuxième extrémité ;
2.2) déplacement avant l'étape iv) du moule auxiliaire (30) à une position de surinjection dans laquelle le moule central (10) et le premier moule latéral (20) constituent les moyens de confinement (100) et définissent une cavité (110) dans laquelle est surinjecté un produit de surinjection pour constituer la première portion d'extrême (2) en matière plastique sur la portion centrale (1) ;
2.3) déplacement après l'étape iii) du moule auxiliaire (30) à une position de libération de moule dans laquelle on extrait l'élément d'union d'un seul tenant.

3. Procédé selon la revendication 1, comprenant, en outre :
une deuxième portion d'extrême (3) en matière plastique qui est surinjectée sur la deuxième extrémité de manière que la portion centrale (1), la première portion d'extrême (2) et la deuxième portion d'extrême (3) forment un élément d'union d'un seul tenant ;
3.1) la mise en place avant l'étape iii) d'un deuxième moule latéral (40) ayant une plaque de moule supérieure et une plaque de moule inférieur à l'opposé de la deuxième extrémité :
3.2) le déplacement avant l'étape iv) du deuxième moule latérale (40) à une position de surinjection dans laquelle le moule central (10), le premier moule latéral (20) et le deuxième moule latéral (40) constituent les moyens de confinement (100) et définissent une cavité (110) dans laquelle est surinjecté un produit de surinjection pour constituer la première portion d'extrême (2) en matière plastique et la deuxième portion d'extrême (3) en matière plastique sur la portion centrale (1) ;
3.3) le déplacement après l'étape iii) du deuxième moule latéral (40) à une position de libération de moule dans laquelle on extrait l'élément d'union d'un seul tenant.

4. Procédé selon l'une quelconque des revendications 1-3, **caractérisé en ce qu'**à la position de surinjection le procédé comprend en outre les étapes de :
a) génération d'un vide dans la cavité (110) à travers les moyens de connexion (130) par le biais de moyens de génération de vide (131) ;
b) introduction du produit de surinjection dans la cavité (110) à travers des moyens d'entrée (200) par le biais de moyens d'introduction (210) ;
c) génération de surpression dans la cavité (110) à travers les moyens de connexion (130) par le biais de moyens de génération de surpression (132) pour obtenir un élément d'union d'un seul tenant comprenant au moins un première portion d'extrême (2).

5. Procédé selon la revendication 4, **caractérisé en ce que** l'étape de génération de vide a) comprend :
a1) atteindre une première pression P1 comprise entre 2500 Pa et 25 kPa dans la cavité (110) pendant un premier temps t1 compris entre 1 s et 120 s ;
a2) terminer l'étape a) avec une deuxième pression P2 comprise entre 2500 Pa et 25 kPa dans la cavité (110) pendant un deuxième temps t2 compris entre 1 s et 120 s.

6. Procédé selon l'une quelconque des revendications 4-5, **caractérisé en ce qu'**il comprend en outre une sous-étape préalable a0) pour atteindre une température préalable T0 comprise entre 20°C et 120°C dans la portion centrale à surinjecter.

7. Procédé selon l'une quelconque des revendications 4-6, **caractérisé en ce que** l'étape d'introduction de matière de surinjection b) comprend :
b1) l'introduction de ladite matière dans la cavité, qui est à une première température T1 comprise entre 100°C et 400°C pendant un troisième temps t3 compris entre 1 s et 120 s ;
b2) terminer l'étape b) à une troisième pression P3 comprise entre 2 MPa et 100 MPa dans la cavité (110) pendant un quatrième temps t4 compris entre 1 s et 120 s.

8. Procédé selon l'une quelconque des revendications 4-7, **caractérisé en ce que** l'étape de génération de surpression c) comprend :
c1) commencer à une quatrième pression P4 comprise entre 2 MPa et 100 MPa dans la cavité (110) pendant un cinquième temps t5 compris entre 1 s et 120 s ;
b2) terminer l'étape c) à une cinquième pression P5 comprise entre 2 MPa et 100 MPa dans la cavité (110).

9. Procédé selon l'une quelconque des revendications 4-8, **caractérisé en ce qu'**il comprend, en outre, sécher au préalable la surface à surinjecter.

10. Procédé selon la revendication 9, **caractérisé en ce que** l'étape de séchage préalable comprend atteindre une température de séchage T0 comprise entre 20°C et 150°C dans la surface à surinjecter pendant un temps de séchage t'0 compris entre 1 s et 120 s.

11. Procédé selon l'une quelconque des revendications 4-10, **caractérisé en ce qu'**il comprend le durcissement postérieur de la surface surinjectée.

12. Procédé selon la revendication 11, **caractérisé en ce que** l'étape de durcissement comprend atteindre une température postérieure Tn comprise entre 20°C et 150°C dans la surface surinjectée pendant un temps postérieur compris entre 1 s et 120 s.

13. Élément de connexion et transmission de contraintes pour des mécanismes de suspension et direction de véhicule automobile comprenant :
une portion centrale sous forme de barre (1) ;
ayant une première extrémité et une deuxième extrémité ;
d'une matière fournissant de la résistance mécanique ;
une première portion d'extrême (2) en matière plastique qui est surinjectée sur la première extrémité de manière à ce que la portion centrale (1) et la première portion d'extrême (2) forment un élément d'union d'un seul tenant ;
fabriqué au moyen du procédé selon l'une quelconque des revendications 1-2, dans lequel le produit de surinjection est une matière ayant :
13a) une structure semi-cristalline ;
13b) un faible niveau d'abrasion pour éviter l'usure de la matière ayant une résistance mécanique par une absence de charges de renfort ;
13c) dans lequel au moins une portion (2, 3) comprend un joint sphérique.

14. Élément de connexion et transmission de contraintes selon la revendication 13, dans lequel le produit de surinjection est une matière ayant un faible coefficient de friction sur les métaux et les plastiques, où le coefficient de friction est 1.

15. Élément de connexion et transmission de contraintes selon l'une quelconque des revendications 13-14, dans lequel le produit de surinjection est une matière choisie parmi les polyamides, les polyesters, les monoacétals, les polyacétals et leurs mélanges.

16. Élément de connexion et transmission de contraintes selon l'une quelconque des revendications 13-15, dans lequel une portion d'extrême (2, 3) comprend une bague configurée pour loger des moyens de fixation.

17. Élément de connexion et transmission de contraintes selon la revendication 16, dans lequel les moyens de fixation comprennent un dispositif sélectionné parmi une douille, un silentbloc et leurs combinaisons.

18. Élément de connexion et transmission de contraintes selon l'une quelconque des revendications 13-17, dans lequel la portion centrale (1) a une forme sélectionnée parmi une forme essentiellement droite, une forme angulaire, un forme de U et un forme de C.

19. Appareil pour fabriquer l'élément de connexion et transmission de contraintes selon l'une quelconque des revendications 13-18 au moyen du procédé selon l'une quelconque des revendications 1-12, dans lequel ledit appareil comprend en outre des moyens d'accouplement (120) pour :
accoupler les moyens de confinement (100) à la surface à surinjecter ;
assurer l'étanchéité entre les moyens de confinement (100) et la surface à surinjecter, en adaptant la forme des moyens de confinement (100) à la surface à surinjecter.

20. Appareil selon la revendication 19, comprenant en outre des moyens de connexion (130) situés dans les moyens de confinement (100) pour permettre la génération d'une pression choisie parmi une pression sous vide et une surpression dans la cavité (110).

21. Appareil selon l'une quelconque des revendications 19-20, comprenant en outre :
des moyens de mesure de pression (140) situés dans les moyens de confinement (100) pour mesurer la pression dans la cavité (110) ;
des moyens de mesure de température (150) situés dans les moyens de confinement (100) pour mesurer la température dans la cavité (110).

22. Appareil selon l'une quelconque des revendications 19-21, comprenant en outre :
des moyens d'introduction (210) pour introduire le produit de surinjection dans la cavité (110) à travers les moyens d'entrée (200).

23. Appareil selon l'une quelconque des revendications 19-22, comprenant en outre :
des moyens de génération de vide (131) pour générer une pression sous vide dans la cavité (110) à travers les moyens de connexion (130) ;
des moyens de génération de surpression (132) pour générer une surpression dans la cavité (110) à travers les moyens de connexion (130).
